(19) Europäisches Patentamt
European Patent Office
Office européen des brevets

(11) EP 4 596 726 A1

(12) EUROPEAN PATENT APPLICATION
published in accordance with Art. 153(4) EPC

(43) Date of publication:
06.08.2025   Bulletin 2025/32

(21) Application number: 23871729.2

(22) Date of filing: 31.08.2023

(51) International Patent Classification (IPC):
$C21D\ 8/12^{(2006.01)}$    $C21D\ 9/46^{(2006.01)}$
$C22C\ 38/00^{(2006.01)}$    $C22C\ 38/60^{(2006.01)}$
$H01F\ 1/147^{(2006.01)}$

(52) Cooperative Patent Classification (CPC):
C21D 8/12; C21D 9/46; C22C 38/00; C22C 38/60;
H01F 1/147; Y02P 10/20

(86) International application number:
PCT/JP2023/031954

(87) International publication number:
WO 2024/070489 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022   JP 2022157415

(71) Applicant: NIPPON STEEL CORPORATION
Chiyoda-ku
Tokyo 100-8071 (JP)

(72) Inventors:
• MORISHIGE, Nobusato
Tokyo 100-8071 (JP)
• ICHIE, Takeru
Tokyo 100-8071 (JP)
• FUJII, Yuya
Tokyo 100-8071 (JP)
• NAKATSUJI, Yuya
Tokyo 100-8071 (JP)
• SASAKI, Tetsuya
Tokyo 100-8071 (JP)
• MURAKAMI, Fuminobu
Tokyo 100-8071 (JP)

(74) Representative: Vossius & Partner
Patentanwälte Rechtsanwälte mbB
Siebertstrasse 3
81675 München (DE)

(54) NON-ORIENTED ELECTROMAGNETIC STEEL SHEET AND METHOD FOR MANUFACTURING NON-ORIENTED ELECTROMAGNETIC STEEL SHEET

(57)     A non-oriented electrical steel sheet includes, by mass%, C: 0.005% or less, Si: 2.00% or more and 4.50% or less, Mn: 0.01% or more and 5.00% or less, Al: 0.03% or more and 5.00% or less, total SE of one kind or two or more selected from the group consisting of S, Se, and Te: more than 0% and 0.005% or less, N: more than 0% and 0.005% or less, and P: more than 0% and 1.000% or less, in which a remainder includes Fe and impurities and Expression (1) and Expression (2) are satisfied, the standard deviation of a ratio $L_{RD}/L_{TD}$ of a length $L_{RD}$ in a rolling direction to a length $L_{TD}$ in a width direction of a circular hole after punching the steel sheet using a substantially circular die is 0.010 or less, and an iron loss $W_{15/50}$ is 2.50 W/kg or less. (Si + Mn + Al) ≥ 4.5%... Expression (1) Al/3 ≤ Mn... Expression (2)

# EP 4 596 726 A1

**Description**

Technical Field

The present invention relates to a non-oriented electrical steel sheet and a method for manufacturing a non-oriented electrical steel sheet.

Priority is claimed on Japanese Patent Application No. 2022-157415, filed September 30, 2022, the content of which is incorporated herein by reference.

Background Art

A non-oriented electrical steel sheet contains 2 mass% to 5 mass% of Si in the case of a high-grade steel sheet. Here, not to show magnetic characteristics biased to a specific orientation of the steel sheet, crystal orientations of crystals are arranged as randomly as possible. Such non-oriented electrical steel sheet has excellent magnetic characteristics, and thus is used, for example, as a core material of a stator and a rotor of a rotary machine.

In addition, regarding such non-oriented electrical steel sheet, various developments have been made to improve the magnetic characteristics. In particular, a further reduction in iron loss is required along with recent demand for energy saving. The iron loss includes eddy-current loss and hysteresis loss. To reduce the eddy-current loss, it is effective to add an element such as Si, Al, or Mn as a steel component to increase specific resistance.

In addition, when the non-oriented electrical steel sheet is used for a rotary machine, non-oriented electrical steel sheets are punched into shapes of a stator and a rotor, and the non-oriented electrical steel sheets are stacked. That is, the plurality of non-oriented electrical steel sheets are stacked during manufacturing of the stator and the rotor, and the stacked body thereof is used for the rotary machine. Therefore, it is important that dimensional accuracy of the punched steel sheets is excellent and the steel sheets are aligned in a predetermined shape.

However, when an element such as Si, Al, or Mn is added as a steel component, the strength of the steel sheet increases, and thus there is a problem in that dimensions of the punched steel sheets may vary.

Patent Document 1 discloses a technique of controlling a deviation in rolling, width, and uniform elongation in each of directions of 45 degrees by controlling a tensile stress and a cooling rate in the cooling process of finish annealing.

In addition, Patent Document 2 discloses a technique of improving punching dimensional accuracy by controlling a relationship of yield stress and sheet thickness and an alloy content balance.

Further, Patent Document 3 discloses a technique of performing skin pass and stress relief annealing after finish annealing by controlling the average grain size, the thickness of an internal oxide layer, and Young's modulus in a rolling direction and/or a width direction.

Citation List

Patent Document

Patent Document 1: Japanese Patent No. 6685491
Patent Document 2: Japanese Unexamined Patent Application, First Publication No. 2004-152791
Patent Document 3: PCT International Publication No. WO 2020/149405

Summary of Invention

Technical Problem

Along with a recent increase in global environmental problems, miniaturization, high output, and high energy efficiency have been required for electrical equipment, and a further reduction in iron loss has been required for a non-oriented electrical steel sheet that is a core material of motors.

To further reduce iron loss, high alloying of increasing the amount of a component such as Si, Mn, or Al is effective. When the high alloying is performed, the strength of the steel sheet is improved, and improvement in motor rotation speed is expected. On the other hand, it was determined that, when the high alloying is performed, the dimension of the steel sheet after being punched into a motor shape (punching dimension) is likely to vary.

Patent Document 1 described above discloses a non-oriented electrical steel sheet capable of improving circularity during punching by controlling a tensile stress and a cooling rate in a cooling process of finish annealing to reduce anisotropy of uniform elongation.

Patent Document 2 discloses a thin electrical steel sheet for a high-efficiency motor having excellent punching dimensional accuracy and high-frequency magnetic characteristics by controlling alloy addition conditions and a relationship between yield stress and a sheet thickness of the steel sheet.

Patent Document 3 discloses a non-oriented electrical steel sheet that is suitable as a split stator having high dimensional accuracy by controlling the average grain size of the steel sheet, the internal oxide layer, and the anisotropy of Young's modulus.

However, the techniques in the related art including Patent Documents 1 to 3 do not disclose a method of reducing a variation in punching dimensions in a coil rolling direction and a coil width direction by focusing on the control of alloy addition amounts and finish annealing conditions. In addition, in the related art, the punching dimensional accuracy for each punching is favorable to some degree, but when punching is performed multiple times, the punching dimensional accuracy may vary. Further, even when the techniques disclosed in the citation lists are utilized, the punching dimensional accuracy in the coil width direction may vary. That is, in the punching method disclosed in the techniques in the related art or in the citation lists, it is presumed that a precise control of the punching dimensional accuracy over the total length and the total width of the coil may be difficult. In particular, when the coil width is large (for example, width is 80 mm or more), a variation in the punching dimensional accuracy is likely to occur, and in the related art, it is presumed that a variation in the punching dimensional accuracy in the coil width direction cannot be completely suppressed.

The present invention has been made in consideration of the above-described problems and the like, and an object thereof is to provide a non-oriented electrical steel sheet having low iron loss and excellent punching dimension accuracy and a manufacturing method thereof.

Solution to Problem

The gist of the present invention is as follows.

[1] A non-oriented electrical steel sheet according to one aspect of the present invention including, as a chemical composition, by mass%,

C: 0.005% or less,
Si: 2.00% or more and 4.50% or less,
Mn: 0.01% or more and 5.00% or less,
Al: 0.03% or more and 5.00% or less,
total SE of one kind or two or more selected from the group consisting of S, Se, and Te: more than 0% and 0.005% or less,
N: more than 0% and 0.005% or less,
P: more than 0% and 1.000% or less,
Cu: 0% or more and 1.0% or less,
Sn: 0% or more and 1.0% or less,
Ni: 0% or more and 1.0% or less,
Cr: 0% or more and 1.0% or less, and
Sb: 0% or more and 1.0% or less,
wherein a remainder includes Fe and impurities and Expression (1) and Expression (2) are satisfied,
the standard deviation of a ratio $L_{RD}/L_{TD}$ of a length $L_{RD}$ in a rolling direction to a length $L_{TD}$ in a width direction of a circular hole after punching the steel sheet using a substantially circular die is 0.010 or less, and
an iron loss $W_{15/50}$ is 2.50 W/kg or less.

$$(Si + Mn + Al) \geq 4.5\% ... \text{Expression (1)}$$

$$Al/3 \leq Mn ... \text{Expression (2)}$$

[2] The non-oriented electrical steel sheet according to [1] may further include, as the chemical composition, by mass%, one or two or more selected from the group consisting of

Ti: 0% or more and 0.0030% or less,
Nb: 0% or more and 0.0030% or less,
V: 0% or more and 0.0030% or less, and
Zr: 0% or more and 0.0030% or less.

[3] A method for manufacturing a non-oriented electrical steel sheet according to one aspect of the present invention, the method including:

a hot rolling step of heating a slab having the chemical composition according to [1] or [2] and performing hot rolling to obtain a hot-rolled steel sheet;
a cold rolling step of performing cold rolling on the hot-rolled steel sheet to obtain a cold-rolled steel sheet;
a finish annealing step of performing finish annealing on the cold-rolled steel sheet to obtain a finish-annealed steel sheet; and
an insulating coating forming step of performing insulating coating on the finish-annealed steel sheet to form an insulating coating on the finish-annealed steel sheet and to obtain an insulating coated steel sheet,
wherein in the finish annealing step, when an average temperature rising rate of the steel sheet in a temperature range from 300°C to 700°C is represented by Vh (°C/sec), the soaking temperature of the steel sheet is represented by Tf (°C), the soaking time of the steel sheet is represented by tf (sec), and the average cooling rate of the steel sheet in a temperature range from 700°C to 300°C is represented by Vc (°C/sec), Tf is 750 to 1100°C, tf is 10 to 300 seconds, and Expression (3) is satisfied, and
when the insulating coating is performed in the insulating coating forming step, a drying temperature Tc (°C) is 250 to 500°C and a steel sheet tensile stress is 0.5 to 5.0 kgf/mm$^2$.

$$Vh/4 \leq Vc \leq 4Vh... \text{ Expression (3)}$$

[4] The method for manufacturing a non-oriented electrical steel sheet according to [3] may further include a hot-band annealing step of performing hot-band annealing on the hot-rolled steel sheet to obtain a hot-band annealed sheet before the cold rolling step. Advantageous Effects of Invention

With the above-described aspects of the present invention, a non-oriented electrical steel sheet having low iron loss and excellent punching dimension accuracy and a manufacturing method thereof can be provided.

Description of Embodiments

The present inventors conducted a thorough investigation on particularly finish annealing conditions to improve punching dimension accuracy in a non-oriented electrical steel sheet, and thus found the following findings.
By controlling the average temperature rising rate of the steel sheet, the soaking temperature and the soaking time of the steel sheet, and the average cooling rate of the steel sheet in the finish annealing step and controlling the drying temperature of the insulating coating and the steel sheet tensile stress in the insulating coating forming step, a non-oriented electrical steel sheet having excellent punching dimensional accuracy can be manufactured.
Hereinafter, a preferred embodiment of the present invention will be described in detail.
Note that the present invention is not limited only to the constitution disclosed in the present embodiment, and various modifications can be made without departing from the gist of the present invention. In addition, regarding limited numerical ranges described below, unless otherwise specified, expression "a to b" concerning numerical values a and b shall mean "a or more and b or less". In such expression, if a unit is added only to the numerical value b, the same unit shall be applied to the numerical value a as well. A numerical value indicated as "less than" or "more than" is not included in the numerical range.

<Non-oriented electrical steel sheet>

Hereinafter, a non-oriented electrical steel sheet according to the present embodiment will be described in detail.

[Chemical composition]

First, a chemical composition of base metal of the non-oriented electrical steel sheet according to the present embodiment will be described.
Hereinafter, unless specified otherwise, "%" represents "mass%".
In addition, the remainder other than elements described below consists of Fe and impurities. Here, the impurity refers to a component contained in the raw material or a component mixed during the manufacturing process, and a component not intentionally contained in the base steel sheet. In addition, a chemical composition of a slab that is a material of the non-oriented electrical steel sheet is basically based on the chemical composition of the non-oriented electrical steel sheet.

C: 0.005% or less

C is an element that may cause magnetic aging in the final non-oriented electrical steel sheet, and thus it is not preferable to contain a large amount of C. Accordingly, the C content is 0.005% or less and preferably 0.004% or less. In addition, the C content is preferably as low as possible, and the lower limit thereof may be 0.0005% or more considering the cost.

Si: 2.00% or more and 4.50% or less

Si reduces eddy-current loss that is one cause for iron loss by increasing electric resistance of the non-oriented electrical steel sheet. When the Si content is less than 2.00%, it is difficult to sufficiently suppress the eddy-current loss of the final non-oriented electrical steel sheet, which is not preferable. When the Si content is more than 4.50%, workability deteriorates, which is not preferable. Accordingly, the lower limit of the Si content is 2.00% or more, preferably 2.40%% or more, more preferably 3.20% or more, and still more preferably 3.30% or more. The upper limit of the Si content is 4.50% or less, preferably 4.30% or less, and more preferably 4.10% or less.

Mn: 0.01% or more and 5.00% or less

Mn has an action of increasing electric resistance similarly to Si and reduces eddy-current loss that is one cause for iron loss. When the Mn content is less than 0.01%, the effect of reducing eddy-current loss is not sufficient, which is not preferable. When the Mn content is more than 5.00%, workability deteriorates, which is not preferable. Accordingly, the lower limit of the Mn content is 0.01% or more, preferably 0.05% or more, and more preferably 0.30% or more. The upper limit of the Mn content is 5.00% or less, preferably 4.00% or less, and more preferably 3.50% or less. The upper limit of the Mn content may be 3.00% or less or 2.50% or less.

Al: 0.03% or more and 5.00% or less

Al has an action of increasing electric resistance similarly to Si and reduces eddy-current loss that is one cause for iron loss. When the Al content is less than 0.03%, the effect of reducing eddy-current loss is not sufficient, which is not preferable. When the Al content is more than 5.00%, workability deteriorates, which is not preferable. Accordingly, the lower limit of the Al content is 0.03% or more, preferably 0.15% or more, and more preferably 0.90% or more, and the upper limit of the Al content is 5.00% or less, preferably 4.00% or less, and more preferably 3.50% or less. The upper limit of the Al content may be 3.00% or less or 2.00% or less.

Total SE of one kind or two or more selected from the group consisting of S, Se, and Te: more than 0% and 0.0050% or less

S, Se, and Te form a precipitate to deteriorate hysteresis loss together with Mn described above. When the total SE of the amounts of S, Se, and Te is more than 0.0050%, the precipitation amount of MnS, MnSe, and MnTe excessively increases, and hysteresis loss deteriorates, which is not preferable. Accordingly, the upper limit of the total SE of the amounts of one kind or two or more selected from the group consisting of S, Se, and Te is 0.0050% or less, preferably 0.0040% or less, and more preferably 0.0030% or less in total. The lower limit of the total SE of the amounts of one kind or two or more selected from the group consisting of S, Se, and Te is as low as possible, and thus may be more than 0%. From the viewpoints of cost and the effect of reducing hysteresis loss, the lower limit is 0.0001% or more.

N: more than 0% and 0.0050% or less

N forms AlN together with Al described above to deteriorate hysteresis loss. When the N content is more than 0.0050, the precipitation amount of AlN excessively increases, and hysteresis loss deteriorates, which is not preferable. Accordingly, the upper limit of the N content is 0.0050% or less. The lower limit of the N content is preferably low and may be more than 0%, and from the viewpoints of cost and the effect of reducing hysteresis loss, the lower limit is 0.0001% or more.

P: more than 0% and 1.000% or less

P has an action of increasing strength without a decrease in magnetic flux density. However, when P is excessively contained, the toughness of the steel deteriorates, and fracture is likely to occur in the steel sheet. Therefore, the upper limit of the P content is 1.000% or less, preferably 0.150% or less, and more preferably 0.120% or less.
The lower limit of the P content is not particularly limited and may be 0.001% or more considering manufacturing cost.

Any one kind or two or more selected from the group consisting of Cu, Sn, Ni, Cr, and Sb: 0% or more and 1.0% or less in terms of each of the contents

**In** addition to the above-described elements, the steel sheet may further contain, as an A group element, one or two or more selected from the group consisting of Cu, Sn, Ni, Cr, and Sb that are elements for improving a texture to improve magnetic flux density. When the A group element is contained, the upper limit of each of the amounts of the above-described elements is 1.0% or less and preferably 0.3% or less. Since the A group element is optionally contained, the lower limit of each of the amounts of the above-described elements is 0% or more and preferably 0.0005% or more.

Any one kind or two or more selected from the group consisting of Ti, Nb, V, and Zr: 0% or more and 0.0030% or less in terms of each of the contents

**In** addition, the steel sheet may further contain, as a B group element, one or two or more selected from the group consisting of Ti, Nb, V, and Zr that are elements for forming a precipitate in the steel to deteriorate hysteresis loss. When the B group element is contained, the amount of each of the above-described elements may be 0% or more and 0.0030% or less. Regarding the B group element, by adjusting the amount of each of the elements to be 0.0030% or less, grain growth of the manufactured non-oriented electrical steel sheet can be further improved to further reduce hysteresis loss. Accordingly, regarding the B group element, the upper limit of the amount of each of the above-described elements may be 0.0030% or less. The lower limit of the amount of each of the B group elements is 0% as it is preferable to be low, but from the viewpoints of cost and the effect of reducing hysteresis loss, the lower limit may be 0.0001%.

$$(\mathrm{Si} + \mathrm{Mn} + \mathrm{Al}) \geq 4.5\%$$

Si, Mn, and Al have an action of increasing electric resistance and reduce eddy-current loss that is one cause for deterioration of iron loss. Each of Si, Mn, and Al has an action of increasing the electric resistance, and even when a combination thereof is added, the effect can be obtained. Therefore, the total amount of Si, Mn, and Al is effective within a range where the electric resistance can be increased. To increase the electric resistance and sufficiently obtain the effect of reducing eddy-current loss, the lower limit of the total amount of Si, Mn, and Al is 4.50% or more, preferably 4.80% or more, and more preferably 5.00% or more. On the other hand, when the total amount of Si, Mn and Al is excessively large, workability deteriorates, which is not preferable. Accordingly, the upper limit of the total amount of Si, Mn, and Al is preferably less than 10.00% and more preferably 9.70% or less.

$$\mathrm{Al}/3 \leq \mathrm{Mn}$$

When Al/3 is more than the Mn content, the punching dimensional accuracy may vary. Therefore, it is effective that the chemical composition satisfies a relationship of Al/3 ≤ Mn. The detailed mechanism where the dimensional accuracy after punching can be improved by satisfying the relationship is not clear but is presumed to be as follows. Al has a higher effect of increasing the steel sheet strength than Mn, and thus is more likely affected by stress in finish annealing and insulating coating. Therefore, when Al/3 is more than the Mn content, it is presumed that for example, due to stress in a sheet width direction caused by thermal deformation, strain in a coil width direction (sheet width direction, that is, a direction perpendicular to a rolling direction and a sheet thickness direction) non-uniformly remains.

The above-described chemical composition is a composition of a silicon steel sheet that is the base metal of the non-oriented electrical steel sheet according to the present embodiment. That is, when an insulating coating is formed on the surface of the non-oriented electrical steel sheet as a measurement sample, the sample is measured after the insulating coating is removed.

Examples of the method of removing the insulating coating of the non-oriented electrical steel sheet include the following method.

First, the non-oriented electrical steel sheet including the insulating coating is sequentially immersed in a sodium hydroxide aqueous solution, a sulfuric acid aqueous solution, and a nitric acid aqueous solution, and is cleaned. Finally, the non-oriented electrical steel sheet is dried with hot air. As a result, a silicon steel sheet described below from which the insulating coating is removed can be obtained.

The above-described chemical composition may be measured by a general analysis method. For example, the chemical composition may be measured using inductively coupled plasma-atomic emission spectrometry (ICP-AES). C and S may be measured by a combustion-infrared absorption method, and N may be measured by an inert gas fusion-thermal conductivity method.

[Punching dimensional accuracy]

The standard deviation of a ratio $L_{RD}/L_{TD}$ of a length $L_{RD}$ in a rolling direction to a length $L_{TD}$ in a width direction of each of circular holes after punching the non-oriented electrical steel sheet using a substantially circular die is 0.010 or less.

A motor core is manufactured by punching the non-oriented electrical steel sheet using the die and stacking the punched non-oriented electrical steel sheets having a core shape. When the punching dimension varies, end surface shapes of the motor core after stacking are non-uniform, and efficiency of the motor decreases, which is not preferable. Accordingly, the standard deviation of the ratio $L_{RD}/L_{TD}$ of the length $L_{RD}$ in the rolling direction to the length $L_{TD}$ in the width direction of the circular hole after punching the steel sheet using the substantially circular die is 0.010 or less. The numerical value in the calculation result of the standard deviation may be treated according to JIS Z9041-1:1999.

The die used for punching is substantially circular. By punching the steel sheet at five points in the coil width direction using the same die, measuring the ratio $L_{RD}/L_{TD}$ of the length $L_{RD}$ in the rolling direction to the length $L_{TD}$ in the width direction of each of the circular holes, and calculating the standard deviation, the punching dimensional accuracy can be evaluated.

As the positions to be punched in the coil width direction, substantially uniform five positions in the coil width direction may be selected from the non-oriented electrical steel sheet or a sample cut from the non-oriented electrical steel sheet. The punching positions may be selected such that, for example, when the obtained sample is divided into five regions in the coil width direction, the vicinity of the center of each of the regions substantially matches with the center of the punching die. The five points to be punched do not need to be arranged on a straight line in the coil width direction, and the punching positions may be changed in the rolling direction in each of the punching regions.

The size of the die used for punching is preferably about 1/10 the length of the obtained sample in the coil width direction, but may be larger or smaller than the length of the sample in the coil width direction as long as five points can be punched in the coil width direction.

A method of measuring the length $L_{RD}$ in the rolling direction and the length $L_{TD}$ in the width direction of the circular hole after punching is not particularly limited. Calipers may be used, a commercially available shape measuring instrument may be used, or the shape may be recorded by a scanner and processed using commercially available image analysis software. The length $L_{RD}$ in the rolling direction and the length $L_{TD}$ in the width direction of the circular hole is preferably measured using digital calipers. The length $L_{RD}$ in the rolling direction of the circular hole refers to the maximum diameter among diameters parallel to the rolling direction, and the length $L_{TD}$ in the width direction of the circular hole refers to the maximum diameter among diameters parallel to the coil width direction.

Here, in the present specification, "rolling direction" may be determined from a rolling pattern of a surface of the non-oriented electrical steel sheet. The rolling pattern may be verified using an optical microscope, a scanning electron microscope, or the like after removing the insulating coating formed on the surface of the non-oriented electrical steel sheet with an alkaline solution or the like. **In** addition, "coil width direction" in the present specification refers to a direction forming an angle of 90 degrees in a plane of the steel sheet with respect to the rolling direction determined from the rolling pattern.

<Magnetic characteristics of non-oriented electrical steel sheet>

The non-oriented electrical steel sheet according to the present embodiment has excellent magnetic characteristics.

When the non-oriented electrical steel sheet according to the present embodiment is magnetized to a magnetic flux density of 1.5 T at 50 Hz, an iron loss $W_{15/50}$ is 2.50 W/kg or less. The iron loss $W_{15/50}$ is preferably 2.40 W/kg or less.

The magnetic characteristics of the non-oriented electrical steel sheet may be measured by a single sheet tester (SST) specified in JIS C 2556:2015. In the 0° and 90° directions, for example, a sample of 55 mm square in the rolling direction may be cut and collected, and when the sample is magnetized to a magnetic flux density of 1.5 T at 50 Hz in each of the rolling direction and an orthogonal-to-rolling direction, the iron loss $W_{15/50}$ may be obtained.

<Method for manufacturing non-oriented electrical steel sheet>

Next, a method for manufacturing a non-oriented electrical steel sheet will be described.

First, a slab having the above-described chemical composition is manufactured. Specifically, the slab is formed by casting molten steel adjusted to have the above-described chemical composition. A method of casting the slab is not particularly limited. In addition, in research and development, even when a steel ingot is formed in a vacuum melting furnace or the like, the same effect as that of the case where the slab is formed can be verified regarding the above-described chemical composition.

<Hot rolling step>

Next, a hot-rolled steel sheet is obtained by heating the slab and performing hot rolling.

The slab heating temperature is not particularly limited. The upper limit value of the slab heating temperature is not particularly limited.

On the other hand, a compound such as a sulfur compound (S compound) or a nitrogen compound (N compound) re-solubilized when heating the slab may finely precipitate such that magnetic characteristics deteriorate. To avoid such deterioration of magnetic characteristics, the slab heating temperature may be 1250°C or lower and preferably 1200°C or lower. The lower limit of the slab heating temperature is not particularly limited and may be 1000°C or higher from the viewpoint of reducing a facility load in hot rolling.

The finishing temperature in the hot rolling is preferably 700°C or higher and 1000°C or lower. The coiling temperature is preferably 500°C or higher and 900°C or lower. The sheet thickness of the hot-rolled steel sheet after hot rolling is preferably, for example, 1.5 mm or more and 3.5 mm or less. When the sheet thickness of the hot-rolled steel sheet is less than 1.5 mm, the steel sheet shape after hot rolling may be poor. When the sheet thickness of the hot-rolled steel sheet is more than 3.5 mm, a rolling load in a cold rolling step may increase. A hot-band annealing step of obtaining a hot-band annealed sheet by optionally performing hot-band annealing on the hot-rolled steel sheet may be executed after the hot rolling step (before the cold rolling step).

[Pickling step]

Pickling may be performed on the hot-rolled steel sheet after hot rolling. When the pickling step is performed, a pickling solution is not particularly limited, and sulfuric acid or hydrochloric acid may be used. The pickling solution may contain a pickling accelerator or inhibitor. In addition, to accelerate removal of an oxide layer formed on the surface of the hot-rolled steel sheet, defects such as cracks may be introduced to the surface of the hot-rolled steel sheet by shot blasting or the like before pickling.

[Cold rolling step]

By performing, on the hot-rolled steel sheet, cold rolling once or performing cold rolling multiple times while interposing intermediate annealing, a cold-rolled steel sheet is obtained. When cold rolling is performed multiple times while interposing intermediate annealing, hot-band annealing in the previous step can also be skipped. Note that, when hot-band annealing is performed, the steel sheet shape is further improved, and the possibility that steel sheet is fractured by cold rolling can be reduced. Before being subjected to cold rolling, it is preferable that the above-described pickling is performed to remove scale or the like attached to the surface of the steel sheet. When pickling is performed, the pickling may be performed at least once after hot rolling and before finish annealing to control precipitates in the sheet thickness direction. When cold rolling is performed multiple times, it is preferable that pickling is performed before each cold rolling from the viewpoint of reducing roll abrasion in cold rolling. The sheet thickness of the cold-rolled steel sheet after the final cold rolling is not particularly limited and is preferably 0.35 mm or less and more preferably 0.30 mm or less from the viewpoint of reducing iron loss. The lower limit of the sheet thickness of the cold-rolled steel sheet is not particularly limited and may be, for example, 0.10 mm or more.

In addition, the steel sheet may be heated to 300°C or lower between passes of cold rolling, between roll stands, or during rolling. Here, magnetic characteristics of the finally obtained non-oriented electrical steel sheet can be improved. As described above, the hot-rolled steel sheet may be rolled by performing cold rolling three or more times. Note that, since multiple times of cold rolling increases the manufacturing cost, it is preferable that the hot-rolled steel sheet is rolled by performing cold rolling one or two times. The cold rolling may be performed by a tandem mill or may be performed by reverse rolling using a Sendzimir mill or the like. When the cold rolling is performed by reverse rolling, the number of passes in each cold rolling is not particularly limited and is preferably nine times or less from the viewpoint of the manufacturing cost.

[Finish annealing step]

Next, by performing finish annealing on the cold-rolled steel sheet, a cold-rolled steel sheet is obtained.

Here, the present inventors found that the punching dimensions in the coil rolling direction and the coil width direction vary depending on a heat pattern of the finish annealing and insulating coating conditions. An atmosphere gas composition in the finish annealing is not particularly limited.

In a temperature rising process of the finish annealing step, when the average temperature rising rate of the cold-rolled steel sheet in a temperature range from 300°C to 700°C is represented by Vh (°C/s), the soaking temperature of the cold-rolled steel sheet in a soaking process is represented by Tf (°C), the soaking time is represented by tf (s), and the average cooling rate of the cold-rolled steel sheet in a temperature range from 700°C to 300°C in a cooling process is represented by Vc (°C/s), Tf is 750 to 1100°C, tf is 10 to 300 seconds, and Expression (3) below is satisfied.

$$Vh/4 \leq Vc \leq 4Vh... \text{ Expression (3)}$$

When the temperature rising rate Vc does not satisfy Expression (3), there is a concern that the punching dimensional accuracy cannot be obtained during the manufacturing of the non-oriented electrical steel sheet.

The detailed mechanism where the heat pattern of the finish annealing step affects the punching dimensional accuracy is not clear but is presumed as follows.

In the finish annealing, typically, the processes of temperature rising, soaking, and cooling are performed as a series of steps, and the tensile stress of the steel sheet controlled in the rolling direction is the same in each of the processes. **In** addition, the steel sheet is fed in the rolling direction by a hearth roll at a sheet passing speed, but the tensile stress control of the steel sheet in the width direction is not performed. However, the steel sheet is thermally deformed in the coil width direction, expands in the width direction by thermal expansion in the temperature rising process, and shrinks in the width direction by thermal shrinkage in the cooling process. Here, the deformation of the steel sheet in the width direction by thermal stress is restricted by the steel sheet tensile stress in the rolling direction and friction with the hearth roll. Here, it is considered that, when various conditions of the finish annealing are not appropriately controlled, the deformation of the steel sheet in the coil width direction becomes non-uniform.

That is, when a difference between the temperature rising rate Vh and the cooling rate Vc in the finish annealing is excessively large, that is, when Expression (3) is not satisfied, a difference in the thermal deformation rate in the coil width direction is excessive, and strain to be introduced is non-uniform depending on positions in the coil width direction. On the other hand, when the temperature rising rate Vh and the cooling rate Vc are appropriately controlled, that is, when Expression (3) is satisfied, a difference in the thermal deformation rate in the coil width direction is maintained in an appropriate range, and strain to be introduced is suppressed in a given range depending on positions in the coil width direction. It is presumed that a part of the strain caused by deformation or restriction at a high temperature remains in the cold-rolled steel sheet even after cooling to generate residual stress, which affects the dimensional accuracy after punching. Accordingly, it is effective that the relationship between the average temperature rising rate Vh and the average cooling rate Vc of the cold-rolled steel sheet in the finish annealing satisfies the range of Expression (3).

**In** addition, the soaking temperature Tf of the cold-rolled steel sheet in the soaking process of the finish annealing largely affects iron loss through grain growth of the cold-rolled steel sheet. When Tf is lower than 750°C, the grain size of the cold-rolled steel sheet is small, and thus the hysteresis loss may be poor. When Tf is higher than 1100°C, the iron loss reduction effect may be saturated, and a facility load may increase. The lower limit of the soaking temperature Tf is 750°C or higher and preferably 800°C or higher, and the upper limit of the soaking temperature Tf is preferably 1100°C or lower and preferably 1075°C or lower.

Further, the soaking time tf of the cold-rolled steel sheet in the soaking process of the finish annealing also largely affects iron loss through grain growth of the cold-rolled steel sheet. When the soaking time tf is shorter than 10 seconds, the grain size of the cold-rolled steel sheet is small, and thus the hysteresis loss may be poor. When the soaking time tf is longer than 300 seconds, the annealing time is long, and the productivity deteriorates. The lower limit of the soaking time tf is 10 seconds or longer and preferably 20 seconds or longer. The upper limit of the soaking time tf is 300 seconds or shorter and preferably 250 seconds or shorter.

As described above, it is presumed that the heat pattern of the finish annealing affects the punching dimensional accuracy and the iron loss. It is presumed that, when the steel sheet component is high-alloy steel, the hardness of the steel sheet increases, and thus such effects are significant.

The coil width during the finish annealing is not particularly limited and may be, for example, 80 mm or more. The coil width may be 200 mm or more, 500 mm or more, or 800 mm or more. Typically, as the coil width increases, a variation in punching dimensional accuracy is likely to occur, but in the non-oriented electrical steel sheet according to the present embodiment, even when the coil width is large, a variation in punching dimensional accuracy can be suppressed over the total coil width. Typically, the electrical steel sheet is provided by slitting a coil in a predetermined width. In the non-oriented electrical steel sheet according to the present embodiment, even in the electrical steel sheet after slitting, a variation in punching dimensional accuracy can be suppressed regardless of positions of the coil in the width direction.

[Insulating coating forming step]

Next, by applying the insulating coating to the surface of the finish-annealed steel sheet after the finish annealing, the insulating coating is provided. **In** the insulating coating forming step, it is effective that the drying temperature Tc (°C) of the insulating coating satisfies a range of 250°C or higher and 500°C or lower, and the steel sheet tensile stress satisfies a range of 0.5 kgf/mm$^2$ or more and 5.0 kgf/mm$^2$. When each of the drying temperature Tc and the steel sheet tensile stress deviates from the above-described range, there is a case where the punching dimensional accuracy cannot be obtained during the manufacturing of the non-oriented electrical steel sheet.

The detailed mechanism where each of the conditions of the insulating coating forming step affects the punching dimensional accuracy is not clear but is presumed as follows.

In the insulating coating forming step, the insulating coating is applied to at least one surface of the finish-annealed steel sheet and is subsequently dried to form the insulating coating. Here, to maintain the punching dimensional accuracy, when the finish-annealed steel sheet passes through a drying furnace after applying the insulating coating, it is preferable that the finish-annealed steel sheet is flat in the coil width direction, and thus, the tensile stress is applied to the finish-annealed steel sheet in the rolling direction in the insulating coating forming step. Here, when the steel sheet tensile stress in the rolling direction is more than 5.0 kgf/mm$^2$, the finish-annealed steel sheet is non-uniformly deformed in the coil width direction, and the punching dimensional accuracy may deteriorate. On the other hand, when the steel sheet tensile stress in the rolling direction is less than 0.5 kgf/mm$^2$, the steel sheet shape in the coil width direction is not flat, and the punching dimensional accuracy may deteriorate. Accordingly, the lower limit of the steel sheet tensile stress in the insulating coating forming step is 0.5 kgf/mm$^2$ or more and preferably 0.7 kgf/mm$^2$ or more, and the upper limit of the steel sheet tensile stress is 5.0 kgf/mm$^2$ or less and preferably 4.0kgf/mm$^2$ or less.

In addition, after forming the insulating coating on the finish-annealed steel sheet to manufacture the insulating coated steel sheet, the steel sheet is wound in a coil shape and shipped in many cases. That is, the drying step of the insulating coating is likely to be the final step that is performed before shipping the coil. Here, when the drying temperature Tc of the insulating coating is higher than 500°C, a non-uniform strain in the coil width direction is generated in some cases such that the punching dimensional accuracy deteriorates. On the other hand, when the drying temperature Tc is lower than 250°C, the drying of the insulating coating may be insufficient. Accordingly, the lower limit of the drying temperature Tc is 250°C or higher and preferably 275°C or higher, and the upper limit of the drying temperature Tc is preferably 500°C or lower and preferably 475°C or lower. It is presumed that, when the steel sheet component is high-alloy steel, the hardness of the steel sheet increases, and thus such effects are significant.

The component of the insulating coating is not particularly limited. For example, the insulating coating may be any one of an organic coating or an inorganic coating. Examples of the organic coating include: polyamine resin; acrylic resin; acrylic styrene resin; alkyd resin; polyester resin; silicone resin; fluororesin; polyolefin resin; styrene resin; vinyl acetate resin; epoxy resin; phenol resin; urethane resin; and melamine resin.

In addition, examples of the inorganic coating include: a phosphate coating; and an aluminum phosphate coating. Further, for example, an organic-inorganic composite coating including the above-described resin can be used.

The average thickness of the above-described insulating coating is not particularly limited and is preferably 0.1 μm to 10.0 μm as an average film thickness per surface.

[Magnetic characteristics evaluation]

The magnetic characteristics such as iron loss of the electrical steel sheet can be measured using a well-known method. For example, the magnetic characteristics of the electrical steel sheet can be measured, for example, using a method based on the Epstein test specified in JIS C 2550:2011 or a single sheet tester (SST) specified in JIS C 2556:2015. In research and development, even when a steel ingot is formed by a vacuum melting furnace or the like, it is difficult to collect a test piece having the same size as that of an actual manufactured product. Here, a test piece having 55 mm width × 55 mm length may be collected to perform the measurement based on the single sheet tester. Further, to obtain the same measured value as that of the method based on the Epstein test, a correction coefficient may be multiplied to the measurement result based on the single sheet tester. In the present embodiment, the measurement is performed using the measurement method based on the single sheet tester.

Optionally, an adhesive or the like may be applied to the surface of the non-oriented electrical steel sheet manufactured through the above-described steps.

The final non-oriented electrical steel sheet can be manufactured through the above-described steps. In the manufacturing method according to the present embodiment, a non-oriented electrical steel sheet having excellent magnetic characteristics can be manufactured.

Examples

Hereinafter, a non-oriented electrical steel sheet according to one embodiment of the present invention and a manufacturing method thereof will be described in more detail with reference to Examples. Examples below are merely examples of the non-oriented electrical steel sheet according to the present embodiment and the manufacturing method thereof, and the non-oriented electrical steel sheet according to the present embodiment and the manufacturing method thereof are not limited to Examples below. The present invention can adopt various conditions as long as the object of the present invention is achieved without departing from the gist of the present invention.

In a laboratory, alloys having chemical compositions shown in Table 1 (Steel Nos. A1 to A29 and a1 to a12) were melted. In Table 1, the amount of each of Cu, Sn, Ni, Cr, and Sb is shown in the field "A group element". Likewise, the amount of each of Ti, Nb, V, and Zr is shown in the field "B group element". In Table 1, the underlines represent that the composition is outside of the range of the present invention, and the blanks represent that the corresponding element content is 0% in the significant digits (numerical value up to the minimum digit) specified in the present embodiment or is less than the lower limit of the component analysis. In addition, the underlines in Tables 1 to 4 represent that the condition is outside of the range of the present invention, that the manufacturing condition is not preferable, or that the characteristic value is not preferable.

Each of the alloys obtained as described above were hot-rolled up to a thickness of 2.0 mm, hot-band annealing was performed according to the description in Table 2, and pickling was performed to obtain a pickled sheet. Next, cold rolling was performed on the pickled sheet such that the thickness became 0.3 mm. Next, finish annealing and insulating coating were performed on the obtained cold-rolled sheet to obtain a non-oriented electrical steel sheet having a width of 80 mm. The width of the passed coil in the finish annealing was 80 mm.

A test piece having a length of 55 mm in the rolling direction and a length of 55 mm in the width direction was cut by shearing from the non-oriented electrical steel sheet after the finish annealing, and magnetic characteristics were measured according to the single sheet tester of JIS C 2556:2015. Here, the measured values of the magnetic characteristics are the average values in the rolling direction and the direction perpendicular to the rolling direction. Here, a case where the iron loss $W_{15/50}$ (iron loss when the steel sheet was magnetized to a magnetic flux density of 1.5 T at 50 Hz) was 2.50 W/kg or less was evaluated as Pass.

Further, the obtained non-oriented electrical steel sheet was punched at five points along the width direction at regular intervals (the interval between the centers of the punching die: about 16 mm) using a circular die of $\varphi$8 mm, and the length in the rolling direction and the length in the width direction of each of the punched circular holes were measured using precision calipers to derive a standard deviation.

[Table 1]

| Steel No. | Chemical Composition (unit: mass%, remainder Fe and im purities) | | | | | | | | | | | | | |
| --- | --- | --- | --- | --- | --- | --- | --- | --- | --- | --- | --- | --- | --- | --- |
| | C | Si | Mn | Al | S | Se | Te | SE | N | P | Si + Mn + Al | Mn-Al/3 | A Group Element | B Group Element |
| A1 | 0.005 | 3.20 | 0.60 | 1.20 | 0.0020 | - | - | 0.0020 | 0.0020 | 0.010 | 5.00 | 0.20 | - | - |
| A2 | 0.003 | 2.00 | 1.00 | 1.50 | 0.0020 | - | - | 0.0020 | 0.0020 | 0.010 | 4.50 | 0.50 | - | - |
| A3 | 0.003 | 2.40 | 1.00 | 1.50 | 0.0020 | - | - | 0.0020 | 0.0020 | 0.010 | 4.90 | 0.50 | - | - |
| A4 | 0.003 | 3.30 | 0.50 | 1.00 | 0.0020 | - | - | 0.0020 | 0.0020 | 0.010 | 4.80 | 0.17 | - | - |
| A5 | 0.003 | 3.50 | 0.50 | 1.00 | 0.0020 | - | - | 0.0020 | 0.0020 | 0.010 | 5.00 | 0.17 | - | - |
| A6 | 0.003 | 4.50 | 0.20 | 0.50 | 0.0020 | - | - | 0.0020 | 0.0020 | 0.010 | 5.20 | 0.03 | - | - |
| A7 | 0.003 | 4.50 | 0.01 | 0.03 | 0.0020 | - | - | 0.0020 | 0.0020 | 0.010 | 4.54 | 0.00 | - | - |
| A8 | 0.003 | 2.70 | 5.00 | 0.50 | 0.0020 | - | - | 0.0020 | 0.0020 | 0.010 | 8.20 | 4.83 | - | - |
| A9 | 0.003 | 4.50 | 2.00 | 0.03 | 0.0020 | - | - | 0.0020 | 0.0020 | 0.010 | 6.53 | 1.99 | - | - |
| A10 | 0.003 | 2.70 | 2.00 | 5.00 | 0.0020 | - | - | 0.0020 | 0.0020 | 0.010 | 9.70 | 0.33 | - | - |
| A11 | 0.003 | 3.20 | 0.60 | 1.20 | 0.0050 | - | - | 0.0050 | 0.0020 | 0.010 | 5.00 | 0.20 | - | - |
| A12 | 0.003 | 3.20 | 0.60 | 1.20 | - | 0.0030 | - | 0.0030 | 0.0020 | 0.010 | 5.00 | 0.20 | - | - |
| A13 | 0.003 | 3.20 | 0.60 | 1.20 | - | - | 0.0030 | 0.0030 | 0.0020 | 0.010 | 5.00 | 0.20 | - | - |
| A14 | 0.003 | 3.20 | 0.60 | 1.20 | 0.0020 | 0.0010 | 0.0010 | 0.0040 | 0.0020 | 0.010 | 5.00 | 0.20 | - | - |
| A15 | 0.003 | 3.20 | 0.60 | 1.20 | 0.0020 | - | - | 0.0020 | 0.0050 | 0.010 | 5.00 | 0.20 | - | - |
| A16 | 0.003 | 3.20 | 0.60 | 1.20 | 0.0020 | - | - | 0.0020 | 0.0020 | 1.000 | 5.00 | 0.20 | - | - |
| A17 | 0.003 | 3.20 | 0.60 | 1.20 | 0.0020 | - | - | 0.0020 | 0.0020 | 0.010 | 5.00 | 0.20 | Cu:1.0% | - |
| A18 | 0.003 | 3.20 | 0.60 | 1.20 | 0.0020 | - | - | 0.0020 | 0.0020 | 0.010 | 5.00 | 0.20 | Sn:1.0% | - |
| A19 | 0.003 | 3.20 | 0.60 | 1.20 | 0.0020 | - | - | 0.0020 | 0.0020 | 0.010 | 5.00 | 0.20 | Ni:1.0% | - |
| A20 | 0.003 | 3.20 | 0.60 | 1.20 | 0.0020 | - | - | 0.0020 | 0.0020 | 0.010 | 5.00 | 0.20 | Cr:1.0% | - |
| A21 | 0.003 | 3.20 | 0.60 | 1.20 | 0.0020 | - | - | 0.0020 | 0.0020 | 0.010 | 5.00 | 0.20 | Sb:1.0% | - |
| A22 | 0.003 | 3.20 | 0.60 | 1.20 | 0.0020 | - | - | 0.0020 | 0.0020 | 0.010 | 5.00 | 0.20 | Sn:0.5-Sb:0.5 | - |
| A23 | 0.003 | 3.20 | 0.60 | 1.20 | 0.0020 | - | - | 0.0020 | 0.0020 | 0.010 | 5.00 | 0.20 | - | Ti:0.003% |
| A24 | 0.003 | 3.20 | 0.60 | 1.20 | 0.0020 | - | - | 0.0020 | 0.0020 | 0.010 | 5.00 | 0.20 | - | Nb:0.003% |
| A25 | 0.003 | 3.20 | 0.60 | 1.20 | 0.0020 | - | - | 0.0020 | 0.0020 | 0.010 | 5.00 | 0.20 | - | V:0.003% |

(continued)

Chemical Composition (unit: mass%, remainder Fe and im purities)

| Steel No. | C | Si | Mn | Al | S | Se | Te | SE | N | P | Si + Mn + Al | Mn-Al/3 | A Group Element | B Group Element |
|---|---|---|---|---|---|---|---|---|---|---|---|---|---|---|
| A26 | 0.003 | 3.20 | 0.60 | 1.20 | 0.0020 | - | - | 0.0020 | 0.0020 | 0.010 | 5.00 | 0.20 | - | Zr:0.003% |
| A27 | 0.003 | 2.70 | 0.20 | 0.50 | 0.0020 | - | - | 0.0020 | 0.0020 | 0.010 | 3.40 | 0.03 | Sn:0.05% | Nb:0.002% |
| A28 | 0.003 | 3.20 | 0.60 | 1.20 | 0.0020 | - | - | 0.0020 | 0.0020 | 0.010 | 5.00 | 0.20 | Sn:0.05% | Ti:0.002% |
| A29 | 0.003 | 3.20 | 0.60 | 1.20 | 0.0020 | - | - | 0.0020 | 0.0020 | 0.010 | 5.00 | 0.20 | - | Ti:0.004% |
| a1 | 0.006 | 3.20 | 0.60 | 1.20 | 0.0020 | - | - | 0.0020 | 0.0020 | 0.010 | 5.00 | 0.20 | - | - |
| a2 | 0.003 | 1.50 | 1.00 | 2.00 | 0.0020 | - | - | 0.0020 | 0.0020 | 0.010 | 4.50 | 0.33 | - | - |
| a3 | 0.003 | 4.70 | 0.60 | 1.20 | 0.0020 | - | - | 0.0020 | 0.0020 | 0.010 | 6.50 | 0.20 | - | - |
| a4 | 0.003 | 4.50 | 0.005 | 0.03 | 0.0020 | - | - | 0.0020 | 0.0020 | 0.010 | 4.54 | -0.01 | - | - |
| a5 | 0.003 | 3.20 | 6.00 | 1.20 | 0.0020 | - | - | 0.0020 | 0.0020 | 0.010 | 10.40 | 5.60 | - | - |
| a6 | 0.003 | 4.50 | 0.60 | 0.005 | 0.0020 | - | - | 0.0020 | 0.0020 | 0.010 | 5.11 | 0.60 | - | - |
| a7 | 0.003 | 2.00 | 2.00 | 6.00 | 0.0020 | - | - | 0.0020 | 0.0020 | 0.010 | 10.00 | 0.00 | - | - |
| a8 | 0.003 | 2.00 | 1.00 | 1.00 | 0.0020 | - | - | 0.0020 | 0.0020 | 0.010 | 4.00 | 0.67 | - | - |
| a9 | 0.003 | 3.00 | 0.50 | 2.00 | 0.0020 | - | - | 0.0020 | 0.0020 | 0.010 | 5.50 | -0.17 | - | - |
| a10 | 0.003 | 3.20 | 0.60 | 1.20 | 0.0020 | - | - | 0.0020 | 0.0020 | 1.500 | 5.00 | 0.20 | - | - |
| a11 | 0.003 | 3.20 | 0.60 | 1.20 | 0.0020 | - | - | 0.0060 | 0.0020 | 0.010 | 5.00 | 0.20 | - | - |
| a12 | 0.003 | 3.20 | 0.60 | 1.20 | 0.0020 | - | - | 0.0020 | 0.0060 | 0.010 | 5.00 | 0.20 | - | - |

[Table 2]

| Manufacturing Method No. | Hot-Band Annealing Step | Finish Annealing Step | | | | | | Insulating Coating Step | |
|---|---|---|---|---|---|---|---|---|---|
| | | Temperature Rising Rate Vh (°C/s) | Steel Sheet Soaking Temperature Tf (°C) | Time tf (s) | Steel Sheet Cooling Rate Vc (°C/s) | Expression (3) Vh/4 ≤ Vc ≤ 4Vh | | Drying Temperature Tc (°C) | Steel Sheet Tensile Stress (kgf/mm²) |
| | | | | | | Vh/4 | 4Vh | | |
| B1 | Performed | 20 | 750 | 60 | 20 | 5 | 80 | 400 | 2.0 |
| B2 | Performed | 20 | 1100 | 60 | 20 | 5 | 80 | 400 | 2.0 |
| B3 | Performed | 20 | 900 | 10 | 20 | 5 | 80 | 400 | 2.0 |
| B4 | Performed | 20 | 900 | 300 | 20 | 5 | 80 | 400 | 2.0 |
| B5 | Performed | 80 | 900 | 60 | 20 | 20 | 320 | 400 | 2.0 |
| B6 | Performed | 20 | 900 | 60 | 80 | 5 | 80 | 400 | 2.0 |
| B7 | Performed | 20 | 900 | 60 | 20 | 5 | 80 | 250 | 2.0 |
| B8 | Performed | 20 | 900 | 60 | 20 | 5 | 80 | 500 | 2.0 |
| B9 | Performed | 20 | 900 | 60 | 20 | 5 | 80 | 400 | 0.5 |
| B10 | Performed | 20 | 900 | 60 | 20 | 5 | 80 | 400 | 5.0 |
| B11 | Not Performed | 20 | 900 | 60 | 20 | 5 | 80 | 400 | 2.0 |
| B12 | Performed | 20 | 900 | 60 | 20 | 5 | 80 | 400 | 2.0 |
| b1 | Performed | 20 | 700 | 60 | 20 | 5 | 80 | 400 | 2.0 |
| b2 | Performed | 20 | 900 | 5 | 20 | 5 | 80 | 400 | 2.0 |
| b3 | Performed | 100 | 900 | 60 | 20 | 25 | 400 | 400 | 2.0 |
| b4 | Performed | 20 | 900 | 60 | 100 | 5 | 80 | 400 | 2.0 |
| b5 | Performed | 20 | 900 | 60 | 20 | 5 | 80 | 200 | 2.0 |
| b6 | Performed | 20 | 900 | 60 | 20 | 5 | 80 | 600 | 2.0 |
| b7 | Performed | 20 | 900 | 60 | 20 | 5 | 80 | 400 | 0.3 |
| b8 | Performed | 20 | 900 | 60 | 20 | 5 | 80 | 400 | 7.0 |

Here, as shown in Table 3, in combinations of Steel Nos. A1 to A29 according to Present Invention Examples and Manufacturing Method Nos. B11 and B12 according to Present Invention Examples, the magnetic characteristics were excellent, and the punching dimensional accuracy satisfied the specified range. The components of the base steel sheet after the finish annealing were the same as the chemical composition shown in Table 1.

On the other hand, in combinations of Steel Nos. a1 to a12 according to Comparative Examples and Manufacturing Method Nos. B11 and B12 according to Present Invention Examples, the magnetic characteristics or the punching dimensional accuracy were poor, and a desired non-oriented electrical steel sheet was not able to be obtained. In addition, in Reference Numbers c3, c5, c7, and c10, cold rolling fracture occurred.

[Table 3]

| Reference Number | Steel No. | Manufacturing Method No. | Magnetic Characteristics | Punching Dimension Accuracy | Note |
|---|---|---|---|---|---|
| | | | Iron Loss $W_{15/50}$ (W/kg) | Standard Deviation | |
| C1 | A1 | B12 | 2.48 | 0.005 | Present Invention Example |
| C2 | A2 | B12 | 2.43 | 0.004 | |
| C3 | A3 | B12 | 2.33 | 0.005 | |
| C4 | A4 | B12 | 2.09 | 0.005 | |
| C5 | A5 | B12 | 2.05 | 0.005 | |
| C6 | A6 | B12 | 1.97 | 0.007 | |
| C7 | A7 | B12 | 2.49 | 0.005 | |
| C8 | A8 | B12 | 2.00 | 0.008 | |
| C9 | A9 | B12 | 2.26 | 0.005 | |
| C10 | A10 | B12 | 1.93 | 0.010 | |
| C11 | A11 | B12 | 2.38 | 0.007 | |
| C12 | A12 | B12 | 2.12 | 0.005 | |
| C13 | A13 | B12 | 2.11 | 0.005 | |
| C14 | A14 | B12 | 2.33 | 0.006 | |
| C15 | A15 | B12 | 2.36 | 0.007 | |
| C16 | A16 | B12 | 2.15 | 0.008 | |
| C17 | A17 | B12 | 2.05 | 0.005 | |
| C18 | A18 | B12 | 1.99 | 0.005 | |
| C19 | A19 | B12 | 2.02 | 0.005 | |
| C20 | A20 | B12 | 2.03 | 0.005 | |
| C21 | A21 | B12 | 1.99 | 0.005 | |
| C22 | A22 | B12 | 1.98 | 0.005 | |
| C23 | A23 | B12 | 2.18 | 0.006 | |
| C24 | A24 | B12 | 2.19 | 0.006 | |
| C25 | A25 | B12 | 2.17 | 0.005 | |
| C26 | A26 | B12 | 2.18 | 0.005 | |
| C27 | A27 | B11 | 2.12 | 0.004 | |
| C28 | A28 | B12 | 2.00 | 0.005 | |
| C29 | A29 | B12 | 2.48 | 0.005 | |
| c1 | a1 | B12 | 2.90 | 0.006 | |

(continued)

| Reference Number | Steel No. | Manufacturing Method No. | Magnetic Characteristics | Punching Dimension Accuracy | Note |
|---|---|---|---|---|---|
| | | | Iron Loss $W_{15/50}$ (W/kg) | Standard Deviation | |
| c2 | a2 | B11 | 2.69 | 0.005 | Comparative Example |
| c3 | a3 | B12 | Cold Rolling Fracture | | |
| c4 | a4 | B12 | 2.52 | 0.011 | |
| c5 | a5 | B12 | Cold Rolling Fracture | | |
| c6 | a6 | B12 | 2.53 | 0.005 | |
| c7 | a7 | B11 | Cold Rolling Fracture | | |
| c8 | a8 | B11 | 2.70 | 0.005 | |
| c9 | a9 | B12 | 2.22 | 0.013 | |
| c10 | a10 | B12 | Cold Rolling Fracture | | |
| c11 | a11 | B12 | 2.52 | 0.009 | |
| c12 | a12 | B12 | 2.53 | 0.005 | |

<Example 2>

In the laboratory, alloys having chemical compositions shown in Table 1 (Steel Nos. A26 and A27) were melted. Each of the alloys obtained as described above was hot-rolled up to a thickness of 2.0 mm, hot-band annealing was performed according to the description in Table 2, and pickling was performed to obtain a pickled sheet (Manufacturing Method Nos. B1 to B12 and b1 to b8). Next, cold rolling was performed on the pickled sheet such that the thickness became 0.3 mm. Next, finish annealing and insulating coating were performed on the obtained cold-rolled sheet to obtain a non-oriented electrical steel sheet having a width of 80 mm. The width of the passed coil in the finish annealing was 80 mm.

A test piece having a length of 55 mm in the rolling direction and a length of 55 mm in the width direction was cut by shearing from the non-oriented electrical steel sheet after the finish annealing, and magnetic characteristics were measured according to the single sheet tester of JIS C 2556:2015. Here, the measured values of the magnetic characteristics are the average values in the rolling direction and the direction perpendicular to the rolling direction. Here, an example where the iron loss $W_{15/50}$ was 2.50 W/kg or less was evaluated as Pass.

Further, the obtained non-oriented electrical steel sheet was punched at five points along the width direction at regular intervals (the interval between the centers of the punching die: about 16 mm) using a circular die of $\varphi 8$ mm, and the length in the rolling direction and the length in the width direction of each of the punched circular holes were measured using precision calipers to derive a standard deviation.

As shown in Table 4, in combinations of Steel Nos. A26 and A27 according to Present Invention Examples and Manufacturing Method Nos. B1 to B12 according to Present Invention Examples, the magnetic characteristics were excellent, and the punching dimensional accuracy satisfied the specified range. The components of the base steel sheet after the finish annealing were the same as the chemical composition shown in Table 1.

On the other hand, in combinations of Steel No. A27 according to Present Invention Examples and Manufacturing Method Nos. b1 to 8 according to Comparative Examples, at least either the magnetic characteristics or the punching dimensional accuracy was poor, and a desired non-oriented electrical steel sheet was not able to be obtained. In Comparative Example d5 as a combination of Steel No. A27 and Manufacturing Method No. b5, the insulating coating formation was defective, and the magnetic characteristics were not able to be measured, and thus the punching accuracy was not able to be measured.

[Table 4]

| Reference Number | Steel No. | Manufacturing Method No. | Magnetic Characteristics | Punching Dimension Accuracy | Note |
|---|---|---|---|---|---|
| | | | Iron Loss $W_{15/50}$ (W/kg) | Standard Deviation | |
| D1 | A27 | B1 | 2.49 | 0.005 | Present Invention Example |
| D2 | A27 | B2 | 1.90 | 0.004 | |
| D3 | A27 | B3 | 2.48 | 0.006 | |
| D4 | A27 | B4 | 1.93 | 0.004 | |
| D5 | A27 | B5 | 2.07 | 0.010 | |
| D6 | A27 | B6 | 2.13 | 0.009 | |
| D7 | A27 | B7 | 2.00 | 0.004 | |
| D8 | A27 | B8 | 2.13 | 0.010 | |
| D9 | A27 | B9 | 1.99 | 0.003 | |
| D10 | A27 | B10 | 2.20 | 0.010 | |
| D11 | A26 | B11 | 2.12 | 0.004 | |
| D12 | A27 | B12 | 2.00 | 0.005 | |
| d1 | A27 | b1 | 2.54 | 0.005 | Comparative Example |
| d2 | A27 | b2 | 2.53 | 0.006 | |
| d3 | A27 | b3 | 2.09 | 0.012 | |
| d4 | A27 | b4 | 2.15 | 0.015 | |
| d5 | A27 | b5 | Coating Defect | | |
| d6 | A27 | b6 | 2.18 | 0.013 | |
| d7 | A27 | b7 | 2.21 | 0.016 | |
| d8 | A27 | b8 | 2.25 | 0.018 | |

<Example 3>

First, a slab containing, by mass%, C: 0.003%, Si: 3.3%, Mn: 0.61%, Al: 1.22%, S: 0.0020%, N: 0.0020%, and P: 0.010%, where the remainder was consisted of Fe and impurities, was prepared, and hot rolling was performed to obtain a hot-rolled steel sheet having a sheet thickness of 2.0 mm.

Next, under conditions of B12, b4, and b8 shown in Table 2, hot-band annealing, pickling, and cold rolling were performed on the hot-rolled steel sheet to obtain a cold-rolled sheet having a thickness of 0.3 mm. Next, finish annealing and insulating coating were performed on the obtained cold-rolled sheet to obtain a non-oriented electrical steel sheet having a width of 1000 mm. Here, the hot-band annealing was performed in an atmosphere of nitrogen 100% under 900°C × 1 minute. In addition, pickling was performed by immersing the steel sheet in a pickling solution for 30 seconds, the pickling solution being prepared by adding 0.07% of polyamine and formic acid to hydrochloric acid (7.5%) at 85°C. In addition, the dew point temperature of the finish annealing was -40°C. The width of the passed coil in the finish annealing was 1000 mm.

A test piece was collected from the non-oriented electrical steel sheet after the finish annealing using a method specified in JIS C 2552:2014, and magnetic characteristics were measured using a method specified in JIS C 2550:2011. Here, an example where the iron loss $W_{15/50}$ was 2.50 W/kg or less was evaluated as Pass.

Further, the obtained non-oriented electrical steel sheet was punched at five points along the width direction at regular intervals (the interval between the centers of the punching die: about 200 mm) using a circular die of $\varphi$100 mm, and the length in the rolling direction and the length in the width direction of each of the punched circular holes were measured using digital calipers to derive a standard deviation.

As shown in Table 5, in the non-oriented electrical steel sheet obtained under the conditions of Manufacturing Method No. B12 according to Present Invention Examples, the magnetic characteristics were excellent, and the punching accuracy also satisfied the specified range. The components of the base steel sheet after the finish annealing were the same as the chemical composition of the slab. As such, in Present Invention Examples, even when the width was a large size (for example, width: 1000 mm) where a variation in the punching accuracy is likely to occur in the related art, a variation in punching accuracy was able to be suppressed over the total width of the steel sheet in the non-oriented electrical steel sheet according to Present Invention Examples.

On the other hand, in Reference Numbers d1 and d2 obtained under the conditions of Manufacturing Method Nos. b4 and b8 according to Comparative Examples, the punching dimensional accuracy was poor, and a desired non-oriented electrical steel sheet was not able to be obtained.

[Table 5]

| Reference Number | Manufacturing Method No. | Magnetic Characteristics | Punching Dimension Accuracy | Note |
|---|---|---|---|---|
| | | Iron Loss $W_{15/50}$ (W/kg) | Standard Deviation | |
| D1 | B12 | 2.00 | 0.005 | Present Invention Example |
| d1 | b4 | 2.12 | 0.018 | Comparative Example |
| d2 | b8 | 2.23 | 0.019 | |

Industrial Applicability

With the above-described aspects of the present invention, a non-oriented electrical steel sheet having excellent magnetic characteristics and punching dimensional accuracy can be provided, and has high industrial applicability.

**Claims**

1. A non-oriented electrical steel sheet comprising, as a chemical composition, by mass%,

   C: 0.005% or less,
   Si: 2.00% or more and 4.50% or less,
   Mn: 0.01% or more and 5.00% or less,
   Al: 0.03% or more and 5.00% or less,
   total SE of one kind or two or more selected from the group consisting of S, Se, and Te: more than 0% and 0.005% or less,
   N: more than 0% and 0.005% or less,
   P: more than 0% and 1.000% or less,
   Cu: 0% or more and 1.0% or less,
   Sn: 0% or more and 1.0% or less,
   Ni: 0% or more and 1.0% or less,
   Cr: 0% or more and 1.0% or less, and
   Sb: 0% or more and 1.0% or less,
   wherein a remainder includes Fe and impurities and Expression (1) and Expression (2) are satisfied,
   a standard deviation of a ratio $L_{RD}/L_{TD}$ of a length $L_{RD}$ in a rolling direction to a length $L_{TD}$ in a width direction of a circular hole after punching the steel sheet using a substantially circular die is 0.010 or less, and
   an iron loss $W_{15/50}$ is 2.50 W/kg or less.

$$(Si + Mn + Al) \geq 4.5\% ... \text{ Expression (1)}$$

$$Al/3 \leq Mn ... \text{ Expression (2)}$$

2. The non-oriented electrical steel sheet according to Claim 1, further comprising, as the chemical composition, by mass%, one or two or more selected from the group consisting of

   Ti: 0% or more and 0.0030% or less,
   Nb: 0% or more and 0.0030% or less,
   V: 0% or more and 0.0030% or less, and
   Zr: 0% or more and 0.0030% or less.

3. A method for manufacturing a non-oriented electrical steel sheet, the method comprising:

a hot rolling step of heating a slab having the chemical composition according to Claim 1 or 2 and performing hot rolling to obtain a hot-rolled steel sheet;

a cold rolling step of performing cold rolling on the hot-rolled steel sheet to obtain a cold-rolled steel sheet;

a finish annealing step of performing finish annealing on the cold-rolled steel sheet to obtain a finish-annealed steel sheet; and

an insulating coating forming step of performing insulating coating on the finish-annealed steel sheet to form an insulating coating on the finish-annealed steel sheet and to obtain an insulating coated steel sheet,

wherein in the finish annealing step, when an average temperature rising rate of the steel sheet in a temperature range from 300°C to 700°C is represented by Vh (°C/sec), a soaking temperature of the steel sheet is represented by Tf (°C), a soaking time of the steel sheet is represented by tf (sec), and an average cooling rate of the steel sheet in a temperature range from 700°C to 300°C is represented by Vc (°C/sec), Tf is 750 to 1100°C, tf is 10 to 300 seconds, and Expression (3) is satisfied, and

when the insulating coating is performed in the insulating coating forming step, a drying temperature Tc (°C) is 250 to 500°C and a steel sheet tensile stress is 0.5 to 5.0 kgf/mm$^2$.

$$Vh/4 \leq Vc \leq 4Vh ... \text{ Expression (3)}$$

4. The method for manufacturing a non-oriented electrical steel sheet according to Claim 3, further comprising a hot-band annealing step of performing hot-band annealing on the hot-rolled steel sheet to obtain a hot-band annealed sheet before the cold rolling step.

## INTERNATIONAL SEARCH REPORT

International application No.

**PCT/JP2023/031954**

### A. CLASSIFICATION OF SUBJECT MATTER

*C21D 8/12*(2006.01)i; *C21D 9/46*(2006.01)i; *C22C 38/00*(2006.01)i; *C22C 38/60*(2006.01)i; *H01F 1/147*(2006.01)i
FI: C22C38/00 303U; C22C38/60; C21D8/12 A; H01F1/147 175; C21D9/46 501B

According to International Patent Classification (IPC) or to both national classification and IPC

### B. FIELDS SEARCHED

Minimum documentation searched (classification system followed by classification symbols)

C21D8/12; C21D9/46; C22C38/00; C22C38/60; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-30684 A (JFE STEEL CORP.) 18 February 2022 (2022-02-18) claims, tables 2-3, steel F | 1-2 |
| Y | | 1-2 |
| X | JP 2022-509677 A (POSCO) 21 January 2022 (2022-01-21) claims, paragraph [0017], tables 1-2, specimen no. A2-A3, B2, B4, D1-D4, E2-E4 | 1-2 |
| Y | | 1-2 |
| X | JP 2021-509442 A (POSCO) 25 March 2021 (2021-03-25) claims, paragraphs [0023], [0040]-[0041], tables 1-2, steel types A5, A7, tables 3-4, steel type B6 | 1-2 |
| Y | | 1-2 |
| X | JP 2019-508574 A (POSCO) 28 March 2019 (2019-03-28) claims, paragraphs [0018], [0025]-[0026], tables 1, 3, steel types A5, A12 | 1-2 |
| Y | | 1-2 |

☑ Further documents are listed in the continuation of Box C.    ☑ See patent family annex.

| | |
|---|---|
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **20 October 2023** | **31 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## EP 4 596 726 A1

### INTERNATIONAL SEARCH REPORT

International application No.

**PCT/JP2023/031954**

**C.    DOCUMENTS CONSIDERED TO BE RELEVANT**

| Category* | Citation of document, with indication, where appropriate, of the relevant passages | Relevant to claim No. |
|---|---|---|
| X | JP 2018-165383 A (NIPPON STEEL & SUMITOMO METAL CORP.) 25 October 2018 (2018-10-25) claims, paragraphs [0017]-[0022], table 1, A12, A18, fig. 1 | 1-2 |
| Y | | 1-2 |
| X | JP 2017-66469 A (NIPPON STEEL & SUMITOMO METAL CORP.) 06 April 2017 (2017-04-06) claims, tables 5, 8, 10-13, steel type D | 1-2 |
| Y | | 1-2 |
| X | JP 2013-10982 A (JFE STEEL CORP.) 17 January 2013 (2013-01-17) claims, tables 2-1 to 3-2, no. 1-7, 13, 15-17, 20-26, 28, 34-35, 37-38, 40, 43 | 1-2 |
| Y | | 1-2 |
| X | JP 2006-45613 A (NIPPON STEEL CORP.) 16 February 2006 (2006-02-16) claims, table 2, E, G, table 4, E0-E5, G0-G1 | 1-2 |
| Y | | 1-2 |
| X | JP 2003-55746 A (SUMITOMO METAL IND., LTD.) 26 February 2003 (2003-02-26) claims, paragraph [0038], table 1, test no. 10 | 1-2 |
| Y | | 1-2 |
| X | JP 2003-113451 A (KAWASAKI STEEL CORP.) 18 April 2003 (2003-04-18) claims, table 3, steel symbol B, table 5, no. 4-6 | 1-2 |
| Y | | 1-2 |
| X | JP 2002-30397 A (SUMITOMO METAL IND., LTD.) 31 January 2002 (2002-01-31) claims, table 1, invention example 9 | 1-2 |
| Y | | 1-2 |
| X | JP 2001-303213 A (KAWASAKI STEEL CORP.) 31 October 2001 (2001-10-31) claims, tables 1-2, steel symbols F, L, R | 1-2 |
| Y | | 1-2 |
| X | JP 2001-192788 A (SUMITOMO METAL IND., LTD.) 17 July 2001 (2001-07-17) claims, table 2, test no. 20, 26-29 | 1-2 |
| Y | | 1-2 |
| X | JP 11-310857 A (SUMITOMO METAL IND., LTD.) 09 November 1999 (1999-11-09) claims, table 1, test no. 6 | 1-2 |
| Y | | 1-2 |
| X | JP 8-41603 A (KAWASAKI STEEL CORP.) 13 February 1996 (1996-02-13) claims, paragraph [0043], tables 1-2, no. 1-18 | 1-2 |
| Y | | 1-2 |
| X | JP 6-248398 A (SUMITOMO METAL IND., LTD.) 06 September 1994 (1994-09-06) claims, table 1, example 2 | 1-2 |
| Y | | 1-2 |
| X | WO 2019/182022 A1 (NIPPON STEEL CORP.) 26 September 2019 (2019-09-26) claims, paragraph [0058], tables 1, 5, steel no. A2 | 1-2 |
| Y | | 1-2 |
| X | WO 2014/168136 A1 (NIPPON STEEL & SUMITOMO METAL CORP.) 16 October 2014 (2014-10-16) claims, tables 4-5, steel type H22 | 1-2 |
| Y | | 1-2 |
| Y | JP 10-24333 A (NIPPON STEEL CORP.) 27 January 1998 (1998-01-27) claims, paragraphs [0001]-[0009] | 1-2 |

Form PCT/ISA/210 (second sheet) (January 2015)

21

**EP 4 596 726 A1**

**INTERNATIONAL SEARCH REPORT**

| International application No. |
|---|
| **PCT/JP2023/031954** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2010/146821 A1 (NIPPON STEEL CORP.) 23 December 2010 (2010-12-23)<br>entire text | 3-4 |

## INTERNATIONAL SEARCH REPORT
### Information on patent family members

International application No.

**PCT/JP2023/031954**

| Patent document cited in search report | | | Publication date (day/month/year) | Patent family member(s) | | | Publication date (day/month/year) |
|---|---|---|---|---|---|---|---|
| JP | 2022-30684 | A | 18 February 2022 | (Family: none) | | | |
| JP | 2022-509677 | A | 21 January 2022 | US | 2022/0018004 | A1 | |
| | | | | claims, paragraph [0054], tables 1-2, specimen no. A2-A3, B2, B4, D1-D4, E2-E4 | | | |
| | | | | WO | 2020/111783 | A2 | |
| | | | | EP | 3889291 | A2 | |
| | | | | KR | 10-2020-0066042 | A | |
| | | | | CN | 113166876 | A | |
| JP | 2021-509442 | A | 25 March 2021 | US | 2020/0332388 | A1 | |
| | | | | claims, paragraphs [0051]-[0052], [0093]-[0096], tables 1-2, steel types A5, A7, tables 3-4, steel type B6 | | | |
| | | | | WO | 2019/132377 | A1 | |
| | | | | EP | 3733880 | A1 | |
| | | | | KR | 10-2019-0077984 | A | |
| | | | | CN | 111527218 | A | |
| JP | 2019-508574 | A | 28 March 2019 | US | 2019/0017137 | A1 | |
| | | | | claims, paragraphs [0056]-[0057], [0079]-[0083], tables 1, 3, steel types A5, A12 | | | |
| | | | | WO | 2017/111549 | A1 | |
| | | | | KR | 10-2017-0075592 | A | |
| | | | | CN | 108474076 | A | |
| JP | 2018-165383 | A | 25 October 2018 | (Family: none) | | | |
| JP | 2017-66469 | A | 06 April 2017 | (Family: none) | | | |
| JP | 2013-10982 | A | 17 January 2013 | (Family: none) | | | |
| JP | 2006-45613 | A | 16 February 2006 | (Family: none) | | | |
| JP | 2003-55746 | A | 26 February 2003 | (Family: none) | | | |
| JP | 2003-113451 | A | 18 April 2003 | (Family: none) | | | |
| JP | 2002-30397 | A | 31 January 2002 | (Family: none) | | | |
| JP | 2001-303213 | A | 31 October 2001 | (Family: none) | | | |
| JP | 2001-192788 | A | 17 July 2001 | (Family: none) | | | |
| JP | 11-310857 | A | 09 November 1999 | (Family: none) | | | |
| JP | 8-41603 | A | 13 February 1996 | (Family: none) | | | |
| JP | 6-248398 | A | 06 September 1994 | (Family: none) | | | |
| WO | 2019/182022 | A1 | 26 September 2019 | US | 2020/0399731 | A1 | |
| | | | | claims, paragraph [0097], tables 1, 5, steel no. A2 | | | |
| | | | | EP | 3770294 | A1 | |
| | | | | KR | 10-2020-0116990 | A | |
| | | | | CN | 111819301 | A | |
| WO | 2014/168136 | A1 | 16 October 2014 | US | 2016/0273064 | A1 | |
| | | | | claims, tables 4-5, steel type H22 | | | |
| | | | | EP | 2985360 | A1 | |
| | | | | KR | 10-2015-0119433 | A | |
| | | | | CN | 105121683 | A | |
| JP | 10-24333 | A | 27 January 1998 | (Family: none) | | | |

Form PCT/ISA/210 (patent family annex) (January 2015)

## INTERNATIONAL SEARCH REPORT
### Information on patent family members

International application No.

**PCT/JP2023/031954**

| Patent document cited in search report | Publication date (day/month/year) | Patent family member(s) | Publication date (day/month/year) |
|---|---|---|---|
| WO 2010/146821 A1 | 23 December 2010 | US 2012/0088096 A1 entire text<br>EP 2444523 A1<br>KR 10-2012-0012486 A<br>CN 102459696 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022157415 A
- JP 6685491 B
- JP 2004152791 A
- WO 2020149405 A